**Europäisches Patentamt**

**European Patent Office**

**Office européen des brevets**

(11) Publication number: **0 032 182**
**A1**

## EUROPEAN PATENT APPLICATION

(21) Application number: **80107274.5**

(22) Date of filing: **21.11.80**

(51) Int. Cl.³: **G 06 F 13/00**

(30) Priority: **03.12.79 IT 2778679**

(43) Date of publication of application:
**22.07.81 Bulletin 81'29**

(84) Designated Contracting States:
**DE FR GB**

(71) Applicant: **Honeywell Information Systems Italia S.p.A.**
**Servizio Brevetti Honeywell Information Systems Italia**
**Via ai Laboratori Olivetti**
**I-20010 Pregnana Milanese (Milano)(IT)**

(72) Inventor: **Ciacci, Franco**
**Via Goito, 7**
**I-20013 Magenta (MI)(IT)**

(54) Apparatus for accessing to common resources by several processors in a multiprocessor system.

(57) In a multiprocessor system comprising several processors (1,2, 3) interconnected, through a common bus (6), to a memory unit (4) including common resources, which can be used by the several processor apparatus for accessing the common resources which grant access to a common resource by a processor only if such resource is not used by another processor in the meantime.

The busy or free status of each resource is indicated in each resource by a lock bit, which is stored in a predetermined memory position. Such bit is brought to a first logical level by a TEST & SET command issued by a processor which interrogates and accesses the resources and to a second logical level by a RESET TEST & SET command when the processor release the resource.

To avoid that a processor interrogating certain resources with a TEST & SET command, and finding them already busy, goes on holding the common bus and stealing memory cycles with subsequent periodic requests, untill the resources are released, any RESET TEST & SET command is notified to the several processors and latched thereon.

Each processor, which has detected busy resources, before trying to access them again, waits for the reception of a RESET TEST & SET signal.

FIG.1

Apparatus for accessing to common resources by several processors in
a multiprocessor system

This invention relates generally to multiprocessor systems and more
particularly to an apparatus for accessing to common resources by se
veral independent and asynchronous processors connected to form a
system.

It is known that system architectures are used to increase multipro
cessor system preformances.

Such architectures consist of several interconnected processing units
which may access to common resources, generally memory resources.

For instance, some data or tables stored into a memory can be used
and modified by several processors which access to such tables in dif
ferent time.

It is also known that possible interferences are to be avoided when pro
cessors access to such common resources and, particularly, it is to be
avoided the access of a processor to a common resource when another
processor is using and modifying such resource.

It is known in fact that the access to common resources by several
processors occurs on the basis of resources handling and occupation
cycles which are assigned to the requesting processors according to
prearranged priorities, and that the handling of a common resource ge
nerally requires several handling and occupation cycles of that resour
ce.

It is known that, to avoid such interferences a resource locking and unlocking mechanism is used.

For instance preliminary to the access to a common resource, read and verify operations are to be effected and a particular locking information, is to be set within the resource.

If the information is present any processor which wants to acceed to such resource is prevented from doing it, by the exception of the one who sets it.

If the information is not present a processor which wants to access to such memory first of all presets such information preventing the other processors from accessing to the memory.

It can thereafter use the resource without other processors interfering with its operation.

When the resource utilization is ended the processor removes the locking information allowing the other processors to access the resources just used.

The locking information can be supplied in several ways.

In the U.S.A. Patent N. 4,000,485 a multiprocessor system is described where several memory units can be used or contain common resources which can be used by several processors.

Each unit is supplied with a flip-flop latching the locking information.

According to another known embodiment, the locking information can be stored in predetermined memory positions, for instance at the beginning of memory areas which constitute common resources accessible by several processors.

In such a way the memory unit is considered as a set of separate common resources, each one provided with its own locking mean.

In such type of systems, even if the risk of interferences among processors for the access to common resources is avoided, it is however present the inconvenient of an unuseful occupation of the common chan nels used for information transfer in case a processor wants to access to a locked common resource.

In fact, as the locking information is into the common resource, to examin such resource it is however required to access it with a read or an interrogation cycle, thus using and occupying a channel connec ting such resource and the unit in which this resource is included. If the locking information is present the processor will continue to periodically interrogate the resource and will periodically continue to occupy the channel connecting such resource and the unit which includes the resource, at detriment of the other processors which could make use of the same connecting channel or of the same unit which includes the resource whith different purposes than the access to such resource.

The problem is more and more serious in the moder multiprocessor systems where a common bus is used for connection.

Such inconvenient is avoided by the apparatus object of the present invention.

According to the invention each system unit, which can access to system common resources through a common bus, is supplied with latching means for an information having the meaning of removed lock or locking information reset.

Such reset information is latched in all the system units everytime anyone of the locking information is reset.

If a unit, which wants to access to common resources, checks that such resources are busy, it will not access the interconnection common bus any more and for the following it will not interrogate the common resource but will wait for a reset signal of the locking information. Only when this signal is received then it access the interconnection common bus and checks if the common resource which has been set free is the same to which it wants to access.

If it is not the case it waits a new reset signal of the locking information and so on.

It is to be noted that owing to such artifice the further advantage is obtained to make the moment in which the units are informed that a common resource is set free simultaneous for the several units which may want to access contemporaneously to common resources.

Consequently, if several units want to access to common resources previously busy, their access requests are presented contemporaneously and the conflicts among units are resolved by granting the access to only one of such units following predetermined priority criterium.

These and other characteristics of the invention will appear more clearly from the following description of a preferred embodiment of the invention made with reference to a multiprocessor system which comprises several processors and a common memory unit interconnected through a common bus.

The several processors can exchange information with the memory on the basis of common bus access cycles, granted to them in a mutually exclusive way, according to preordered priority criteria.

They further can exchange information among themselves through an in-terprocessor notify mechanism which signals that the information to be exchanged is stored in common memory resources.

The access to and the liberation of such common resource are a speci-fic object of such invention.

The following description is made with reference to the attached drawings where:

Figure 1 shows in block form a multiprocessor system architecture with a common bus.

Figure 2 shows in block form the logic architecture of each processor.

Figure 3 shows the conventional symbol used to evidence J-K flip-flops.

Figure 4 shows the logic diagram of the dialogue unit included in each processor.

Figure 5 shows the memory unit of the system with reference to the priority assignment logic for accessing the bus and the memory.

Figure 6 shows in timing diagram the dialogue performed on the bus in case of an operation of access to memory and in case of a notifying command between processors.

Figure 7 shows in schematic diagram the organization of common resources located in a memory space.

Figure 8 is a flow diagram of the operations carried out by a processor for storing a message addressed to another processor in common memory resources and for notifying it of such action.

Figure 9 is the flow diagram of the operations carried out by a processor, in answer to a notifying signal, for accessing the common memory resources and reading the message intended for it.

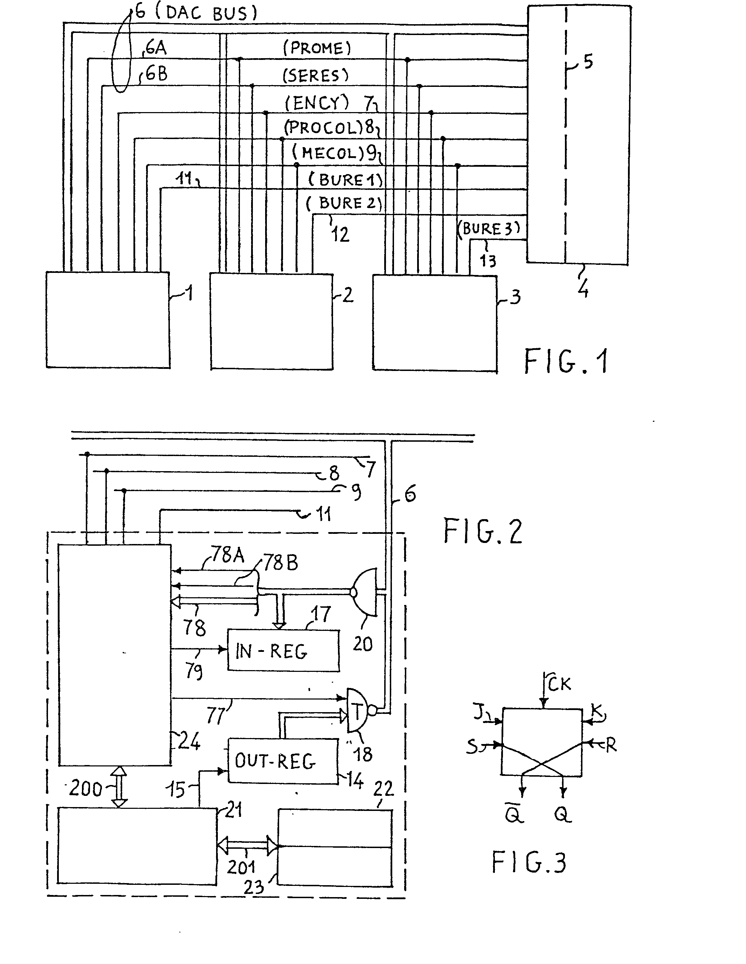

Figure 1 shows in block diagram the architecture of the multiprocessor system and the bus interconnecting the several units.

The system consists of three units or processors 1, 2 and 3 (generally N processors) and a working memory 4 to which a memory access controller GAM 5 is coupled.

The different units 1, 2, 3 and GAM 5 are interconnected by means of a common bus system comprising a suitable number of leads.

The system bus allows for the information transfer from any processor to the working memory and viceversa.

The information transfer can be started by any processor in synchronous way and involves bus occupation for the time required by the transfer: the function of GAM 5 is to settle the conflicts among several processors which want to occupe the bus at the same time allowing
bus access    to one processor at a time according to appropriate
priority criteria.

An information transfer, in fact, can be made between memory and only
a processor each time.

According to the invention the common bus allows for direct exchange
of notifying signals among several processors without involving the
memory.

Following such exchanges the notified processors can successively read
in the memory the messages intended for them and previously stored in
suitable memory zones.

In such way the message exchange among processors is possible without
the notified processors have to assume a subordinate status as to the
notifying processors.

The system bus comprises:

- a group of leads 6 for the transfer of data - addresses - commands
and possibly check bits, such group totally comprising, for instance,
72 leads (4data bytes, 2 address bytes, 1 command byte and 1 check
bit for each byte).

Such group of leads 6, named DAC-BUS, is bidirectional: each unit such
as 1, 2, 3 and 4 is coupled to DAC-BUS by means of interface circuits
which can both receive and transmit signals.

In the rest condition the transmitting circuits have a  virtually
infinite output impedance so the DAC-BUS leads are virtually disconnected from the units.

In the work condition the transmitting circuits can apply to the leads
one of the two electrical levels corresponding to two logical levels
0 or 1.

In the following, unless otherwise specified, the convention will be
adopted in which logical level 1 is a high electrical level and logical level 0 is a low or zero electrical level.

Such levels can be detected by all receiving units.

Logical transmitting circuits of such kind are known as TRISTATE-DRI VERS and are available on the market so that any related additional information is not essential for understanding the present invention;

- a group of leads 7, 8, 9 for the transfer of signals controlling the signals of.dialogue between processors and memory, such signals being respectively named ENCY, PROCOL, MECOL.

These leads couple the several units 1, 2, 3 and 4 with an interconnec tion of the type known as "open collector"; as explained later on such type of interconnection requires the interconnection line be con nected to an appropriate voltage source, through a resistor.

In each unit the line is connected to a receiver with relatively high impedance; in at least a unit such line is connected to an open col lector transmitter which can connect said line to ground or virtually disconnect it so as to apply to such line an electrical and logical level 0 or 1, respectively.

Clearly it suffices that one of the several transmitter connects the line to ground to obtain the electrical/logical level 0 on the whole line and to have it detected by the several receivers.

- a group of leads 11, 12, 13 which individually couple each unit 1, 2 and 3 with GAM 5 through an open collector coupling, such leads are used both to send to GAM 5 bus access request signals, named BURE 1, BURE 2 and BURE 3 respectively and to receive from GAM 5 its consent.

For the invention purposes it is evidenced that within DAC-BUS 6 there are two leads 6A and 6B used for the transfer of two commands named PROME and SERES respectively. Such leads allow for the exchange of a notifying signal among several processors.

Figure 2 is a block diagram of the architecture of a processor such as units 1, 2 or 3 of Figure 1.

The unit comprises two interface registers for the storing of the received information and of information to be transmitted on the bus, namely DAC-BUS 6.

A register 14 (OUT-REG) is used as output register for data in output to the DAC-BUS and register 17 (IN-REG) is used as input register for data in input from DAC-BUS.

Register 14 outputs are coupled to the inputs of a TRISTATE transmitter set 18 whose outputs are coupled to DAC-BUS.

Register 17 inputs are coupled to the DAC-BUS through a set of receivers 20.

The processor comprises further a control unit 21, an operating unit 22 a working register set 23, an interface dialogue unit 24.

The control unit 21 sends a control signal to register 14, through lead 15, to enable the register to store information to be transferred to the DAC-BUS.

It also sends suitable commands to the operating unit, to the working registers and to the interface dialogue unit 24 receiving in turn signals from it. The communication paths are schematically shown as 200 and 201.

The interface registers communicate through suitable, not shown, paths with the working registers and the operating unit.

Dialogue unit 24 is connected to system BUS leads already shown in Figure 1 with references 7, 8, 9 and 11 (or 12 or 13). In addition, it enables the transmitter set 18, through a signal on lead 77, and the loading of register 17, through a signal on lead 79.

Dialogue unite 24 receives further directly from output of receivers 20, some information present on DAC-BUS 6, including the ones present on leads 6A and 6B, through bus 78 and leads 78 and 78B.

A detailed description of the architecture of a processor such as the one of Figure 2 is not essential for the invention understanding as such architecture can be made in several ways even very different each other: therefore such description is omitted.

A more detailed description of embodiment can be found, for instance, in U.S. Patent n. 3,710,324.

On the contrary, for the present invention purposes, the architecture of dialogue and priority unit 24, contained in each processor, as well as of the working memory 4 with particular reference to GAM 5, will be considered in detail.

Before going on with the description it is suitable to mention the operation of bistable circuits or J-K flip-flops, owing to their large use in the following of this description.

Figure 3 shows the conventional representation diagram generally used for such flip-flop which is available on the market since a long time as an integrated circuit.

The J-K flip-flop is a bistable circuit, provided with a timing clock input, with two direct or set-reset asynchronous inputs S, R, with two synchronous or clock conditioned inputs J-K, and with two outputs Q and $\bar{Q}$.

A signal applied to S, R inputs activates the flip-flop putting it permanently in one of two possible electrical status, while the signals at the J-K inputs activate the flip-flop only when the trailing edge of a positive electrical/logical pulse is applied to input CK.

The following table summarizes the flip-flop operation.

| Inputs | | | | | Outputs | |
|---|---|---|---|---|---|---|
| S | R | CK | J | K | Q | $\bar{Q}$ |
| L | H | X | X | X | H | L |
| H | L | X | X | X | L | H |
| L | L | X | X | X | H | H |
| H | H | L | L | L | $Q_o$ | $\bar{Q}_o$ |
| H | H | L | H | L | H | L |

| Inputs | | | | | Outputs | |
|---|---|---|---|---|---|---|
| S | R | CK | J | K | Q | $\bar{Q}$ |
| H | H | L | L | H | L | H |
| H | H | L | H | H | toggle | |
| H | H | H | X | X | $Q_o$ | $\bar{Q}_o$ |

In the table L stands for the logical/electrical level 0 present at the corresponding input/output.

H for a logical/electrical level 1.

X for an indifference condition.

$Q_o$ and $\bar{Q}_o$ stand for the state of Q and $\bar{Q}$ outputs before the signals are applied.

For instance, it can be seen that both the two inputs S, R must be at logical level 1 to have the flip-flop activated by clock pulse (CK=L). Later on, for sake of clearness, flip-flop J-K will be evidenced in the several figures as in Figure 3 without reference letters.

Always for sake of clarity, the possible leaving out of any indication on some inputs, particularly J-K inputs, will mean that an appropriate electrical signal "1" or "0", suitable to obtain the desired behaviour, is permanently applied to such inputs.

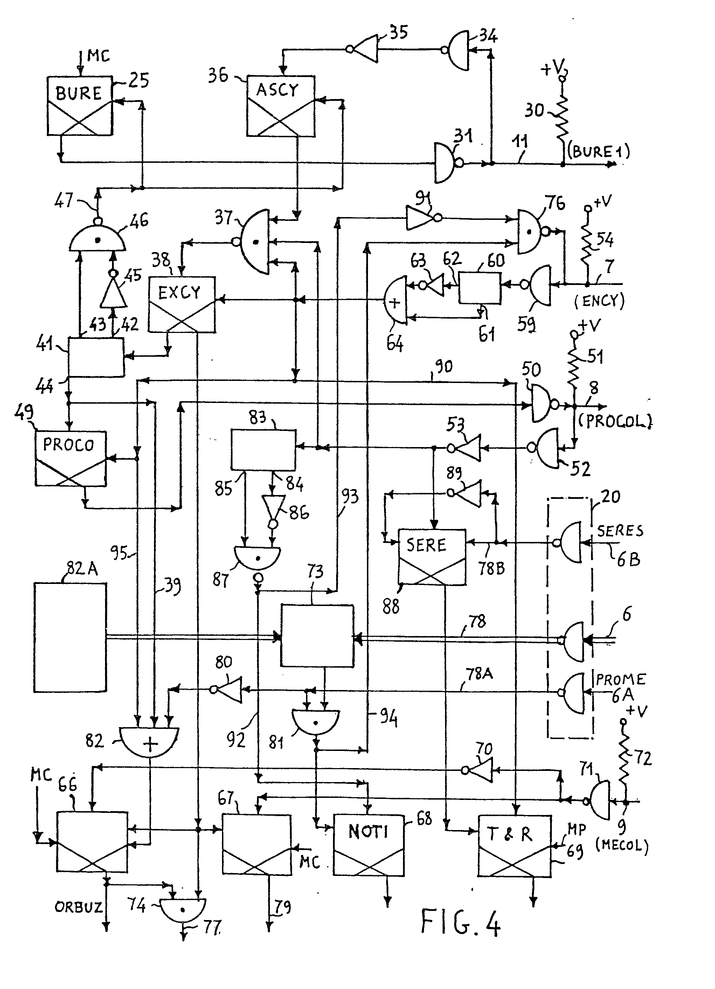

Figure 4 shows, in detail, a preferred embodiment of a dialogue unit 24 contained in each processor 1, 2 or 3 of Figure 1 and particularly referring to processor 1.

The unit 24 has the function to enable both the information exchange between processor 1 and the memory and the exchange of notify signals among processor 1 and any other processor of the system.

In addition such unit is able to receive the notify signal from any of the other processors.

Unit 24 comprises a J-K flip-flop 25 (BURE) which receives at clock input a microcommand MC, coming from control unit 21 (Fig. 2).

The inverted output $\bar{Q}$ of flip-flop 25 is connected to the input of an open collector inverter/driver 31.

The output of inverter/driver 31 is connected to the system bus lead 11. Lead 11 is connected to a + V voltage source through a resistor 30 and it is coupled with GAM 5 at the other end.

Flip-flop 25 is normally reset: it is therefore clear that its inverted output is at logical level 1: thus lead 11 (BURE 1) is normally at logical level 0.

When processor 1 requests access to the bus its control unit produces a pulse command MC, in asynchronous way relative to the system operation (though inside the processor the event may occur at a predetermined instant of its machine cycle).

In such way flip-flop 25 is set.

Lead 11 rises to logical level 1 and signals to GAM 5 that processor 1 wants to access to the bus (signal BURE 1 at 1). With such signal processor 1 does not access to the bus as the bus may be already engaged by other processors or as other processors may present concurrently their access request to the bus.

As explained later on the conflict resolution among requesting processors is effected by GAM 5.

Going on with unit 24 description it will be noted that lead 11 is coupled, through receiver/inverter 34 and NOT 35, to the clock input of a J-K flip-flop 36 (Flip-flop ASCY).

This is because in the preferred example of embodiment, lead 11 is used for a bidirectional exchange of signals to minimize the number of BUS leads, as described in Italian Patent Application N. 23037 A/78 filed by the same assignee on May 5, 1978.

As described in such application and reconsidered later on, GAM 5 answers the requesting processors by dropping the BURE signal on lead 11 to logical level 0 when it has decided to allow such processor to ac- ces the BUS.

This causes flip-flop 36 (ASCY) to be set.

It is however clear that the answer to the processor could be sent on a separate lead, other than lead 11.

Direct output Q of flip-flop 36 is connected to a first input of a three input circuit NAND 37, whose output is connected to the clock input of a J-K flip-flop 38 (Flip-flop EXCY).

Enabling signals, which will be considered later on, are applied to the other two inputs of NAND 37. They enable the signal transfer from output Q of flip-flop 36 to the clock input of flip-flop 38 only when the BUS is really free.

In fact in the described embodiment the cycle assignment operations can overlap the execution and finishing of the possible previous cycle to minimize the information transfer rate on the BUS.

Then, when flip-flop 36 (ASCY) is set, once the execution of the possible previous cycle is completed, flip-flop 38 is set and BUS occupation and information transfer starts.

The $\bar{Q}$ output of EXCY is connected to the input of delay line 41 having output taps 42, 43, 44.

The signal trailing edge at the $\bar{Q}$ output of EXCY (consequent to the setting of EXCY) propagates along such line.

Output 42 is connected to the input of a NOT 45.

Output 43 and the NOT 45 output are connected to the inputs of a two input NAND gate 46.

When the delay line is inactive (EXCY reset) the outputs 43 and 42 are at logic level 1 and NOT 45 output is at logical level 0.

Therefore NAND 46 output is normally at logical level 1.

When a trailing edge propagates along line 41 output 42 drops to logical level 0 before output 43.

Thus NOT 45 output rises to logical level 1, while output 43 is still at logical level 1 and a pulse at logical level 0 appears at NAND 46 output.

The NAND gate 46 output is connected both to the reset input of flip-flop 36 (ASCY) and to the reset input of flip-flop 25 (BURE) through lead 47.

The output 44 of delay line 41 is connected to the clock input of flip-flop 49 (PROCO). Therefore with the set of flip-flop EXCY, flip-flop 36 (ASCY) and flip-flop 25 are reset and immediatly afterwards flip-flop 49 (PROCO) is set.

The direct output Q of flip-flop 49 is connected to the input of an open collector inverter/driver 50 whose output is connected to system BUS lead 8 to apply PROCOL signal thereto.

Lead 8 is connected to a +V voltage source through a resistor 51, therefore it is normally at logical level 1 but it goes to logical level 0 when flip-flop 49 is set.

It is to be noted that if PROCOL was previously at logical level 0, say because flip-flop 49 wa already set, say because the corresponding flip-flop of any other system processor was already set, flip-flop 38 (EXCY) and 49 (PROCO) set would have been prevented till PROCOL would have gone to logical level 1.

In fact, lead 8 is connected to the input of an inverter/receiver 52 whose output is connected to the input of a NOT 53.

The output of NOT 53 is connected to the second input of the already considered NAND 37.

Therefore the set of flip-flop 38 is conditioned (inter alia) by the presence of a logical level 1 on lead 8 (PROCOL).

Flip-flops 38 (EXCY) and 49 (PROCO) are reset as follows.

Line 7 ends in each processor with a receiver/inverter 59 and with an open collector AND/driver 76.

Line 7 is normally held at logical level 1 by GAM 5 and by the several processors, this level being dropped to 0 near the end of a BUS occupation cycle and rising again to 1 at the cycle end.

The output of receiver 59 is connected to the input of a delay line 60 having output taps 61, 62.

Intermediate tap 61 is connected to a first input of a two inputs OR 64.

Tap 62 is connected to the input of a NOT 63, whose output is connected to the second input of OR 64.

The output of OR 64 is connected to the reset input of flip-flops 38, 49.

When delay line 60 is at rest (ENCY at logical level 1) its outputs are at logical level 0, and the output of OR 64 is at logical level 1. When ENCY falls to logical level 0 the rising edge at the receiver 59 output propagates from input to outputs of line 60 and brings output 61 to logical level 1 before output 62 goes to 1.

OR 64 output remains at logical level 1.

On the contrary when ENCY rises back to logical level 1 it is easy to see that a short pulse at logical level 0 appears at OR 64 output.

This pulse is suitably delayed relative to ENCY leading edge, and resets flip-flops 38 and 49.

It is clear that only a processor at a time will have flip-flops such as 38, 49 set but ENCY command is clearly forwarded to all the processors.

Dialogue unit 24 comprises further some flip-flops which describe the status of interface registers and store the occurrence of particular events on the interconnection BUS.

These are flip-flops 66, 67, 68, 69.

When flip-flop 66 is set it indicates that output register 14 has been loaded and it is busy, that is contains information to be transferred on the DAC-BUS.

This status is accessible to control unit 21 through direct output of flip-flop 66 which transmits to control unit 21 an ORBUZ signal indicating that OUT REG is loaded.

When flip-flop 67 is set it enables the loading of input register 17 with the information present on DAC-BUS through lead 79 connected to its direct output.

The same lead 79 is used to indicate to the control unit that input register 17 has been loaded.

Direct output Q of flip-flop 38 (EXCY) is connected to K input of flip-flop 66, to J input of flip-flop 67 and to a first input of an AND gate 74 through lead 75.

The clock input of flip-flop 66 is connected to the output of a NOT 70 whose input is connected to the output of a receiver/inverter 71.

The clock input of flip-flop 67 is directly connected to the output of receiver/inverter 71.

The input of receiver 71 is connected to lead 9 on which a MECOL signal, normally at logical level 1 is received from GAM 5.

Lead 9 is held at logical level 1 by a "pull up" resistor 72.

The set input of flip-flop 66 and the reset input of flip-flop 67 receive the MC microcommand from control unit 21; this is the same microcommand which sets flip-flop 25 and enables, through lead 15, the loading of register 14.

When the processor wants to access to the BUS it arranges the suitable information loading (data, commands, addresses) in register 14 and at the same time, sets the two flip-flops 25 (BURE) and 66.

When the channel is assigned to the requesting processor (flip-flop 38 is set) the information stored in register 14 is transferred on DAC-BUS through TRISTATE 18 circuits enabled by the output of AND 74 circuit (lead 77)

In fact AND 74 has its two inputs coupled with the direct outputs of the two flip-flops 38 and 66 and it enables TRISTATE 18 circuits with output 77.

On DAC-BUS the information is therefore present beginning with the lowering of PROCOL signal till memory 4 answers by lowering MECOL signal thus causing the reset of flip-flop 66.

Likewise flip-flop 67, when reset, causes the loading of register 17 through a signal at level 1 on its direct output connected to lead 79 and indicates that to the control unit.

In fact flip-flop 67 is set by the rising edge of MECOL signal which occurs when Memory 4 has put on DAC-BUS the data to be loaded into register 17.

MECOL signal is produced by memory circuit block when the information transfer requires a read or write operation of the memory and therefore involves one of the processors and the memory.

On the contrary, as it will be shown later on, in case of communication among processors, memory is not involved in the information transfer and MECOL signal is not produced.

It is therefore necessary to arrange a second reset circuit for flipflop 66 considering such possibility.

Likewise ENCY signal is normally produced by the memory.

In case of communication among processors the memory does not produce any ENCY signal and this one must be produced by the notified processor.

Therefore an ENCY signal generation circuit and a second reset circuit for flip-flop 66 must be provided in each processor.

Such considerations lead to a more detailed description of the processor notifying or communication mechanism.

When a processor wants to notify information to another processor it previously stores into memory the message to be transferred, using the normal transferring mechanism from processor to memory.

Later on such aspect will be considered in detail.

Then the processor loads into register 14 a code corresponding to the notified processor name and a control PROME bit at logical level 0 in dicating that the required transfer does not involve the memory.

Once the access to DAC-BUS has been obtained, such information is available to all the processors connected to the BUS through receiving circuit without register interposition.

In each processor a name generator device is arranged.

Such device can be a register or a key set which can be manually prearranged and which allow to apply to a suitable number of leads electrical levels 1 or 0 corresponding to the name of each processor.

The code on the BUS is compared, in a comparison network, available in each processor, with the processor name determined by the name ge_nerator.

For that processor and only for that one, for which its name and the code on the BUS coincide, the comparison network emits a positive comparison signal which, conditioned by the presence of PROME signal at logic level 0, sets a notifying flip-flop and causes the generation of the signal ENCY of cycle end.

Figure 4 shows that the dialegue logic comprises a group of keys 82 and a comparator circuit 73.

The output of the key set is connected to a first input set of a comparator 73 which receives at a second input set, connected to channel 78 through a set 20 of receivers/inverters, the name of the notified processor present on the DAC-BUS.

The output of comparator 73 is coupled with an input of a two input AND 81. The second input of AND 81 is connected to lead 78A which receives through a receiver/inverter of set 20 the $\overline{\text{PROME}}$ signal.

When PROME is at logical level 0 and the comparison between the notified name and the processor name matches, the output of AND 81, connected to the J input of flip-flop 68, applies to such input a logical level 1.

The set of flip-flop 68 is obtained by means of a signal derived from PROCOL.

The output of NOT 53 is coupled with the input of a delay line 83 having a plurality of taps 84, 85.

First tap 84 is connected to the input of an inverter 86.

The inverter output is connected to an input of a two input NAND 87.

Second tap 85 of the delay line is directly connected to the second input of NAND 87.

The set including dealy line 83, NOT 86 and NAND 87 forms a pulse ge nerator.

It is easy to see that when a PROCOL signal on lead 8 drops to logical level 0 a short pulse at logical level 0 appears at the output of NAND 87 with a certain delay due to line 83 characteristics.

The output of NAND 87 is connected through lead 92, to the clock input of flip-flop 68 and set it if the logical level at J input is 1.

This occurs to the notified processor (PROME at logical level 0 and mat ched comparison between notifying code or name and processor name).

The output of NAND 87 is further connected, through lead 93, to the input of a NOT 91 whose output is connected to an input of an open collector NAND 76.

The output of AND 81 is connected, through lead 94, to a second input of NAND 76. As already said, NAND 76 output is connected to lead 7.

Therefore, through elements 91 and 76, a notified processor generates a short pulse ENCY at logical level 0 on lead 7 normally held at logical level 1 by a "pull up" resistor 54.

Such pulse reaches all the processors through lead 7.

The notifying processor which started the transfer cycle of the notify message receives the pulse through its receiver 59 and resets its flip -flops 38 (EXCY) and 49 (PRCCO).

It is to be noted that the output of OR 64 is connected both to the reset input of flip-flops 38 and 49 and, through lead 45 and circuit OR 82, to the reset input of flip-flop 66.

Circuit OR 82 has a second input connected to a NOT 80 output, whose input in its turn is connected to lead 78A, and a third input connected, through lead 39 to the output 44 of delay line 41.

Therefore, when PROME signal is at logical level 0, the second input of OR gate 82 is at logical level 0, the third input of OR gate 82 is at logical level 0 in the notifying processor and the pulse at logical level 0 coming from OR 64 output is transferred to the output of OR gate 82 and resets flip-flop 66.

When PROME signal is at logical level 1, the output of NOT 80, at logical level 1, masks the reset pulse applied to flip-flop 66 through OR 82.

Indipendently from PROME signal level, output 44 of the delay line 41 masks the reset pulse applied to flip-flop 66 in all the processors which did not have access to the BUS during the outstanding cycle.

To complete the description of dialogue unit 24, some of its circuits will be mentioned, though they are not directly involved in the information transfer process between processors and memory or in the notification among processors.

The circuits in question are two flip-flops 69, 88 and some logical elements coupled to them.

Flip-flop 88 (SERE) has its clock input connected to the output of NOT 53 through which it receives PROCOL signal.

The K input of flip-flop 88 is connected, through lead 78B, to the output of a receiver/inverter of a group 20 and receives through it a SERES signal present on lead 6B.

The J input of flip-flop 88 is connected to lead 78B through NOT 89.

Therefore, if SERES signal on lead 6B is at logical level 1, flip-flop 88 is set or maintained in set by the trailing edge of PRCCCL signal, while it is reset or maintained in reset if SERES signal is at logical level 0

The direct output Q of flip-flop 88 is connected to the J input of flip-flop 69.

Clock input of flip-flop 69 is connected, through lead 90, to the output of OR gate 64.

Therefore, with the reset of flip-flops 38, 44, flip-flop 69 (T&R) is set too if during the same cycle flip-flop 88 has been set.

Flip-flop 69 is reset by a microcommand MP. The function of flip-flop 69 will be considered later on.

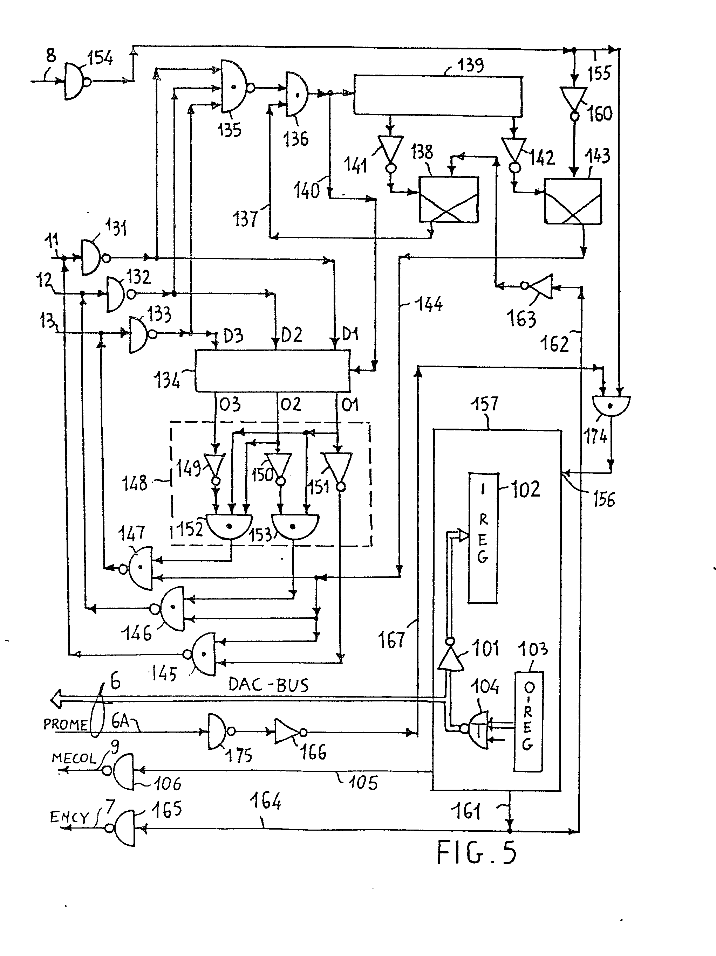

Having described in detail the dialogue handling unit of the several processors it is now useful to describe the system memory unit 4 with particular reference to GAM 5 of such unit. Figure 5 shows such unit. Lead 11 is connected to the input of a receiver/inverter circuit 131, lead 12 is connected to the input of a receiver/inverter circuit 132 and likewise lead 13 is connected to the input of a receiver/inverter circuit 133.

The outputs of receivers 131, 132 and 133 are connected, on one side, to corresponding inputs of a NAND 135 and, besides, to data inputs D1, D2, D3 of a register 134 respectively.

The output of NAND 135 is connected to one input of a two input AND 136.

AND 136 receives at its second input, through lead 137, an enabling signal from output $\bar{Q}$ of a J-K flip-flop 138.

The output of AND gate 136 is connected to a multitapped delay line 139 and to the clock input of register 134, through lead 140.

A first output tap of delay line 139 is connected to the input of an inverter or NOT 141 element, whose output is connected to the direct SET input of J-K flip-flop 138.

A second output tap of delay line 139 is connected to the input of a NOT 142 whose output is connected to the direct SET input of a J-K flip-flop 143.

The direct output Q of flip-flop 143 is connected, through lead 144, to the enabling input of three inverter/driver NAND gates 145, 146 and 147.

The output of such inverters/drivers 145, 146 and 147 are connected to leads 11, 12, 13 respectively.

The signal input of the three inverter/drivers 145, 146, 147 is connected to three outputs U1, U2, U3 respectively of an exclusion logic matrix or priority network 148.

Outputs 01, 02, 03 of register 134 form the inputs of priority network 148.

In Figure 5 the priority network comprises three NOT 149, 150, 151 and two AND 152, 153 with three and two inputs respectively.

Output 01 of register 134 is connected, through inverter 151, to output U1 of network 148 and it is applied to the signal input of inverter/driver 145.

Output 01 is further connected to a first input of the two AND gates 152 and 153.

Output 02 of register 134 is connected, through inverter 150, to a second input of AND 153 whose output U2 is connected to the signal input of inverter/driver 146.

Output 02 is further connected to a second input of AND gate 152.

At last, output 03 of register 134 is connected, through inverter 149, to a third input of AND gate 152 whose output U3 is connected to the signal input of inverter/driver 147.

The function of the exclusion logic matrix or priority network 148 is to assign a relative priority to the access requests to DAC-BUS recei ved from the several processors through leads 11, 12, 13 and to enable the output from the network of the request with higher priority
in case of several simultaneous requests.

The shown priority network assigns, for instance, highest priority
to access requests coming from processor 1 through lead 11, intermediate priority to access requests coming from processor 2, through
lead 12 and lowest priority to requests coming from processor 3,
through lead 13.

It can be noted that a signal at logical level 0 on terminal tap 01
is transferred to output U1, where (owing to NOT 151) it appears in
inverted form say as a signal at logical level 1 without any conditio
ning.

On the contrary a signal at logical level 0 present on terminal 02 is
transferred to output U2 only if a signal at logical level 1 is present at the same time on terminal 01 which indicates that an access
request with higher priority is not present.

Likewise a signal at logical level 0 present on terminal 03 is transfer
red to output U3 only is a signal at logical level 1 is present at the
same time on both terminals 02 and 01.

Taps 01, 02, 03 represent the outputs of the register 134 cells corresponding respectively to inputs D1, D2, D3 and devoted to store access requests received on leads 11, 12, 13 respectively as information
at logical level 0.

The operation of memory interface circuits hitherto described is there
fore clear.

When a processor, for instance processor 2, wants to access the memory,
it rises the signal present on lead 12 to logical level 1.

Therefore the output of receiver/inverter 132 falls to logical level 0,
and the output of NAND gate 135 rises to logical level 1.

If AND gate 136 is enabled because J-K flip-flop 138 is reset (as it will be seen later on, this means that memory cycles are not already in progress) logical level 1 is transferred to the output of AND element 136 and it activates the loading of register 134 through lead 140. Logical level 0 present at the output of NAND 132 is loaded into the register together with the logical level present at the output of the other NAND 131 and 133.

At the same time the logical level 1 present at the output of NAND 136 is applied to the delay line 139 and propagates along it.

When logical level 1 reaches the first tap, the output of NOT 141 falls to logical level 0 and J-K flip-flop 138 is set.

Thus output $\bar{Q}$ of flip-flop 138 falls to logical level 0 and this has the effect of disabling AND gate 136.

Therefore possible following access requests are not transferred to the output of AND gate 136 and are not taken in account until flip-flop 138 is reset again.

When logical level 1, which propagates along delay line 139, reaches the second output tap, flip-flop 143 is set too, through NOT 142.

Thus, direct output Q of such flip-flop rises to logical level 1 enabling AND/DRIVER circuits 145, 146, 147.

The access request with higher priority among the possible ones previously stored by register 134, if that is the case, has been in the meantime presented to the output of priority network 148 as logical level 1.

Supposing that a logical level 1 is present, at output U2, the output of open collector NAND/DRIVER 146 falls to logical level 0.

Therefore logical level 1 present on lead 12 is forced to 0 as answer and acceptance of the access request.

At this point it is to be born in mind that flip-flops 138 and 143 are set, that is they have not been put in the initial reset status.

However when the processor whose request has been accepted receives the acceptance response, it lowers signal PRCCOL on lead 8 at logical level 0, thus indicating that it really accesses the memory.

Logical level 0 present on lead 8 is received by the memory through receiver/inverter 154 whose output rises to logical level 1.

The output of receiver/inverter 154 is connected, through lead 155 and AND gate 174, to an input 156 of a memory control logic block 157 and activates it if AND gate 174 is enabled.

This block is not shown in detail because it is not essential for understanding the invention.

Block 157 also receives, through DAC-BUS 6, information representative of commands (for instance, write/read, diagnostic test ), of memory addresses and of data to be written in the memory.

The DAC-BUS, which is bidirectional, will be also used for sending back to the requesting processor, memory state signals and readout data.

The DAC-BUS is connected, through a receiver/inverter set 101 to the inputs of an input register group 102 (I-REG).

Lead 6A of DAC-BUS is further connected, through a receiver/inverter 175, a NOT 166 and a lead 167, to an enabling/disabling input of AND gate 164.

Lead 6A transfers the PROME command from the processor which accessed the DAC-BUS to the memory.

If PROME is at logical level 1, gate 164 is enabled and the signal pre sent on lead 155 is transferred to memory block 157 activating it.

If PROME is at logical level 0, any activation of the memory block does not occur.

Another group of output registers 103 (O-REG) of logic block 157 has its outputs connected to the inputs of a TRISTATE NAND/DRIVER group 104 whose outputs are connected to DAC-BUS 6.

As soon as logical block 157 receives the signal at logical level 1 on

lead 155, it enables the loading of registers 102 and starts the memory operations defined by the content of such registers.

At the same time logical block 157 produces on output lead 105 a level 1, indicating the beginning of a memory cycle.

Lead 105 is connected to the input of an inverter/driver 106 whose output is connected to BUS lead 9.

Therefore, on such lead, signal MECOL falls to logical level 0 and informs the processor to which access to the bus has been granted that the memory cycle has started and that the information present on DAC-BUS can be removed.

In fact, as already seen with reference to figure 4, signal MECOL at 0 causes the reset of flip-flop 66 and the disabling of driver group 18 (Fig. 2).

When the requested operation is completed and, for instance, in case of data read operation, the data are loaded together with other useful information into the register group 103 (O-REG), logic block 157 enables the driver group 104 to transfer such data and information on DAC-BUS and at the same time it lowers again to 0 the signal present on lead 105.

Signal MECOL on BUS lead 9 rises again to 1.

As already seen, this causes the set of flip-flop 67 (Figure 4) of the processor to which the cycle has been granted and enable the loading of the information present on DAC-BUS into register group 17 (Figure 2).

The output of receiver/inverter 154 is further connected, through inverter 160 to the clock input of flip-flop 143.

Therefore as soon as PROCOL falls to logical level 0, the output of inverter 160 falls to logical level 0 and flip-flop 143 is reset.

Consequently the logical level at direct output Q of such flip-flop falls to 0 and NAND/DRIVERS 145, 146, 147 are disabled so their outputs

0032182

are disconnected from ground and resume again the normal reset state.
(It is to be recalled that elements 145, 146, 147 are of the "open
collector" type).

At the end of the memory cycle, or preferably some time before, for
the reason which will be stated later on, the memory control logic
block 157 produces on output lead 161 a cycle-end signal at logical level 1.

The signal is applied, through lead 162 and the inverter 163, to the
clock input of flip-flop 138 and resets it, thus enabling the transfer
of new or still pending access requests through AND circuit 136.

Signal on lead 161 is further sent through lead 164 to the input of
inverter/driver 165 whose output is connected to BUS lead 7.

Then signal ENCY on lead 7 falls to logical level 0 and signals to
the several processors that the memory cycle in progress is ending.

Signal ENCY is held at logical level 0 untill the end of the memory
cycle, that is, it rises to 1 when the memory is ready to begin a new
cycle.

As already described, the reset of flip-flop 38, 49 of the dialogue
unit in the processor to which the cycle has been assigned occurs with
ENCY rising again to logical level 1.

The previous description shows the operation of the memory circuits
and of GAM 5 in case a processor requires an information transfer (read
/write) involving the memory.

In this case signal PROME at logical level 1 will be present among the
processor commands sent on the DAC-BUS.

The operation of GAM 5 is the same in case a processor wants to send
a notifying signal to another processor.

Even in this case the BUS will be assigned by GAM 5 to the notifying
processor following the already seen priority criterium.

However, in such case, the signal PROME at logical level 0 is present among the signals sent by the processor through the DAC-BUS.

Consequently no memory cycle is activated and no generation of signals MECOL and ENCY at logical level 0 occurs from the memory.

Instead, as already seen, signal ENCY is produced by the notified processor and the reset function of signal MECOL on flip-flop 66 is, in this case, obtained from the combined effect of signal ENCY and signal PROME at logical level 0.

It is now useful, for a better understanding of the invention, to reconsider as a whole the operation of the information transfer mechanism among the several processors and the memory and the notifying mechanism from a processor to another one.

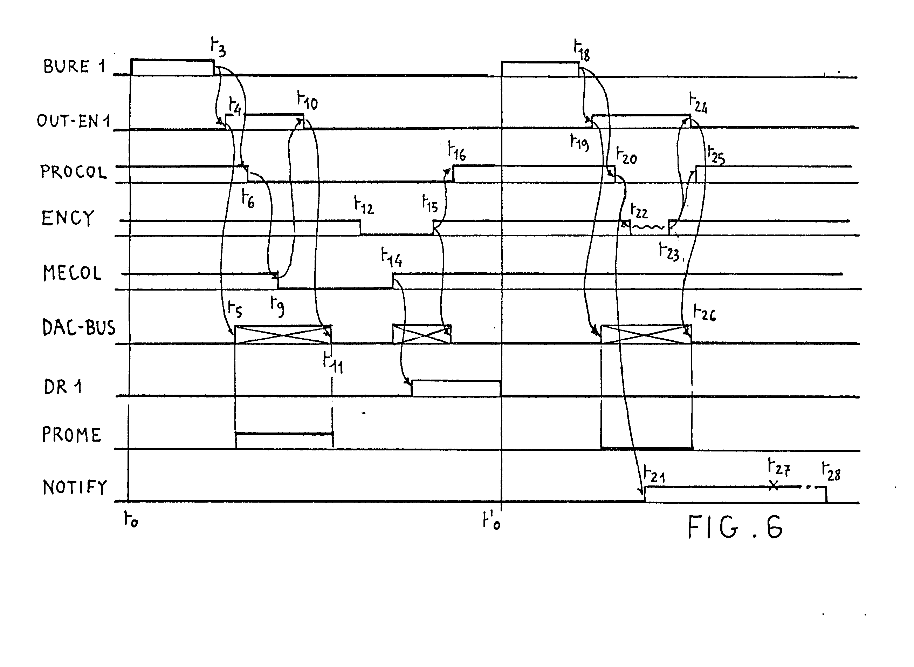

Such description is made with reference to the timing diagram of figure 6.

Diagram BURE 1 shows the logical level present on lead 11 at the output of processor 1.

Diagram PROCOL shows the logical level present on lead 8.

Diagram ENCY shows the logical level present on lead 7.

Diagram MECOL shows the logical level present on lead 9.

Diagram OUT EN 1 shows the logical level present at the output of AND gate 74 of processor 1 dialogue unit.

Diagram DAC-BUS shows the DAC-BUS state.

Diagram PROME shows the state of lead 6A of the DAC-BUS.

Diagram DR 1 shows the logical level present at the output of flip-flop 67 (Fig. 4) of processor 1.

Diagram NOTIFY shows the logical level present at the output of flip-flop 68 of a notified processor.

The chaining arrows from edge to edge of the various diagrams show the chaining of the events.

The case of processor (processor 1) which wants to read data in working memory 4 is considered at first.

At an initial time $t_0$ processor 1 produces an access request: register 14 (Figure 2) is loaded and flip-flops 25 and 66 are set.

BURE 1 rises at logical level 1 and spreads along line 11.

When BURE 1 is received by GAM 5 it activates, through logical gates 131, 135, 136, the loading of register 134, the delay line 139, the set of flip-flop 138 and finally the set of flip-flop 143 which enables the several outputs of logical gates 145, 146, 147.

In case of access requests sent at the same time by several processors, register 134 would contain such different access requests.

Priority network 148 recognizes the highest priority access request (that is BURE 1).

Therefore the output of inverter driver 145 is grounded and BURE 1 falls to logical level 0.

This level 0 spreads along lead 11 and at time $t_3$ it is received by processor 1, informing such processor that its request is accepted.

The fall of BURE 1 to logical level 0, detected by receiver 34, sets flip-flop 36 activating the BUS occupation.

First flip-flop 38 is set, then flip-flops 25, 36 are reset and flip-flop 49 is set.

At a time $t_4$ OUT EN 1 rises to logical level 1 allowing the transfer of information from register 14 onto DAC-BUS (time $t_5$).

Logical level 1 of DAC-BUS diagram shows that meaningful information is present of the DAC-BUS. Such information may comprise, for instance, a memory address and suitable commands among which a read command and a signal PROME at logical level 0 on lead 6A.

For better clearness sake the logical level of such signal is separately evidenced as Diagram PROME.

With flip-flop 49 set, PROCOL falls to logical level 0 (time $t_6$).

When GAM 5 receives signal PROCOL at logical level 0, it reset flip-flop 143 and, as signal PROME is at logical level 1 and AND gate 164 is enabled, it loads register 102 with the information present on DAC-BUS and lowers to logical level 0 signal MECOL (time $t_9$), starting a memory cycle (or more generally operations specified by the received information).

When processor 1 receives MECOL at logical level 0, flip-flop 66 is reset and signal OUT EN 1 (time $t_{10}$) falls to logical level 0 removing the information from DAC-BUS (time $t_{11}$).

In the other processors MECOL produces no effects.

Nearabout the memory cycle end, GAM 5 lowers to logical level 0 signal ENCY (time $t_{12}$).

At the same time it resets flip-flop 138 (Figure 5) and allows the recognition of pending access requests and the loading of register 134. Such operation occurs before the memory cycle is ended, so that the propagation time of signals in the priority network and associated circuits, and then along leads 11, 12, 13 up to the processors, overlaps the cycle already in progress, so that the selected processor be already prepared to access the BUS without delay since the beginning of the new cycle.

Nearabout the memory cycle end, GAM 5 raises again to logical level 1 signal MECOL (time $t_{14}$) and at the same time it allows the transfer of the information contained into register 103 (for instance data read out from memory) on the DAC-BUS.

In processor 1 the new rising of MECOL to logical level 1 causes the set of flip-flop 67 with consequent loading of the information present on DAC-BUS into register 17.

At the memory cycle end GAM 5 raises again ENCY to logical level 1 (time $t_{15}$) and rids DAC-BUS of present information.

As soon as processor 1 receives the rising edge of ENCY flip-flops 38 and 39 are reset and PROCOL rises again to logical level 1 (time $t_{16}$).

The ENCY rising has effects neither on the other processors nor on flip-flop 66 which is already reset.

The described dialogue is also used for memory write operations.

In such case, besides the memory address, PROME command and write command, also the data to be written will be put on DAC-BUS.

The only difference is that in such case the memory does not necessarily put on DAC-BUS a response information at the cycle end though flip-flop 67 is however set.

The case of a processor (for instance 1) which wants to notify another processor (for instance 2) is now considered.

In this case too processor 1 produces, at an initial time $t'_0$, an access request to the BUS: register 14 (Figure 2) is loaded with the suitable information (that is processor 2 name and command PROME at suitable logical level)and flip-flops 25 and 26 are set.

BURE 1 rises to logical level 1 and spreads along line 11. When BURE 1 is received by GAM 5, it activates, through logical elements 131, 135, 136, the loading of register 14, the delay line 139, the set of flip-flop 138 and finally the set of flip-flop 143 which enables the several outputs of logical elements 145, 146, 147.

In case of more access requests present at the same time, register 134 would contain these several access requests.

Priority network 148 recognizes the access request with highest priority (that is BURE 1).

Therefore the output of inverter/driver 145 is grounded and BURE 1 falls to logical level 0.

This level 0 spreads along line 11 and at time $t_{18}$ is received by processor 1 and notifies that its request is accepted.

The fall of BURE 1 to logical level 0, detected by receiver 34, set flip-flop 36 and activates the BUS occupation.

First flip-flop 38 is set then flip-flop 25 and 36 are reset and flip-flop 49 (PROCO) is set.

At a time $t_{19}$ OUT EN 1 rises to logical level 1 allowing the information transfer from register 14 to DAC-BUS (time $t_{19}$).

Logical level 1 of DAC-BUS indicates that some meaningful binary information is present on DAC-BUS.

Essentially (in this case) such information consists in the name of the notified processor (processor 2) and in signal PROME at logical level 0 on lead 6A (Diagram PROME).

With the set of flip-flop 49, PROCOL falls to logical level 0 (time $t_{20}$).

When GAM 5 receives signal PROCOL at logical level 0 it resets flip-flop 143.

On the contrary no memory cycle starts because signal PROME at logical level 0 inhibits AND gate 164 (Figure 5).

So GAM 5 has completed its own job.

The name of notified processor present on DAC-BUS is recognized by the comparator circuit of processor 2 (corresponding to 73 of Figure 4), so that a logical level 1 is applied to J input of flip-flop NOTI, corresponding to 68 in processor 2, through AND gate corresponding to 81 in processor 2 and enabled by PROME at logical level 0.

Signal PROCOL at logical level 0 is received by all the processors, processor 2 included, and in this last one it sets flip-flop NOTI (diagram NOTIFY, time $t_{21}$).

In this last one it also causes the grounding for a short time of interface lead 7.

Therefore ENCY falls to logical level 0 for said time interval ($t_{22}$ - $t_{23}$).

With the new rising of ENCY to logical level 1, which is detected by all the processors, processor 1 included, signal OUT EN 1 ($t_{24}$) is removed on processor 1 and therefore the meaningful signals are removed from DAC-BUS ($t_{26}$).

0032182

- 32 -

In addition, always in processor 1, flip-flop 66 and flip-flop PROCO are reset. PROCOL rises again to logical level 1 $(t_{25})$.

At the end of this BUS occupation cycle, which is completed in a short time interval because the activation of a memory cycle is not requested, the notified processor is in a notify state with its flip-flop NOTI set.

From now on processor 2 will be able, during its operation and following its own appropriate criteria, to consider the received notify signal at the most suitable time $(t_{27})$ and to reset flip-flop NOTI (time $t_{28}$).

Once considered how the dialogue on the system BUS is effected, both in case of information transfer from a processor to a working memory and in case of notifying signal transfer among processors, it is now useful to consider how the intercommunication among processors is obtained.

In fact the intercommunication among processor requires, to be effective, that messages with suitable information content can be exchanged among processors.

The exchange of a notifying signal is not enough.

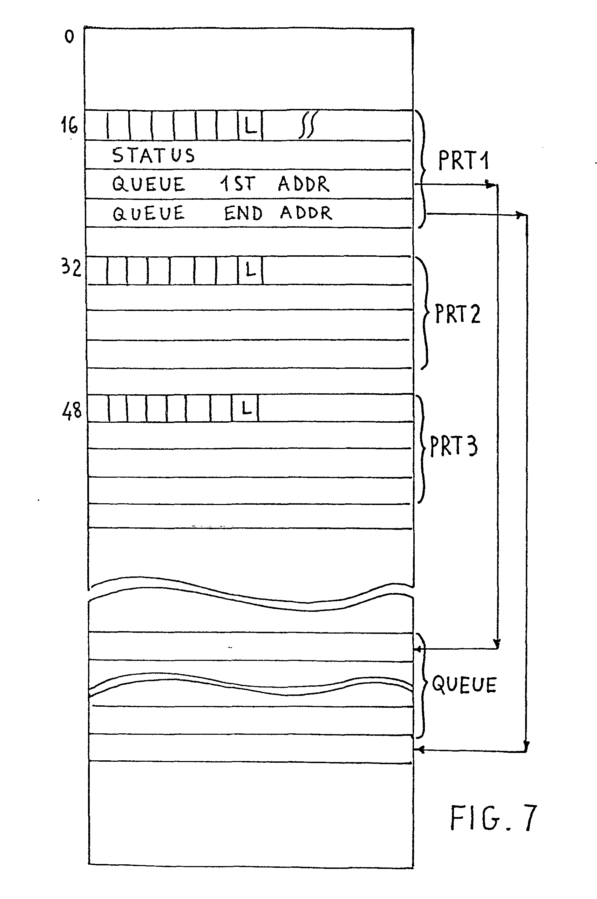

To this purpose, as shown in Figure 7, the addressable memory space, for example of 64K memory positons (each one with a suitable parallelism, for instance 16 or 32 bits plus possible parity control bits ), comprises memory zones dedicated to each processor located to start from memory fixed addresses.

For instance memory 4 comprises a zone with addresses starting from 16 dedicated to processor 1 and named PRT1, a zone with addresses starting from 32 dedicated to processor 2 and named PRT2, a zone dedicated to processor 3 and named PRT3.

The information contained in each table is, indicatively, the following:

1° table word: it includes a bit L (the eighth in Figure 7) with function of access control to the table.

Such bit, if at logical level 1, indicates that a processor is reading and updating the table and that the other processors cannot have access to the same table.

Bit L is raised to logical level 1 by the processor which access the table and is lowered to logical level 0 by the same processor.

Other bits can be used as control and error correction bits.

2° table word: it contains status indicator bits. For instance a bit can indicate, when at logical level 1, that a program or a service which must be executed by the notified processor has been "queued" or arranged in a queue.

Another bit can indicate that at least one of the peripherals coupled with a processor has pending a disconnect request.

3° table word: it contains a "QUEUE STARTING POINTER" of pending programs/services, that is the memory position where it is stored the beginning address of the first program or service which must be executed by the processor which the table is dedicated to.

4° table word: it contains a "QUEUE ENDING POINTER" of pending programs/services that is the position memory address immediately following to the one where the last word is stored of the last program/service intended for the processor which the table is dedicated to.

Other table words may contain other queue pointers, for instance an executed service queue, a queue of services to be cancelled, and others.

The "QUEUE STARTING POINTER" and the "QUEUE ENDING POINTER" of each processor table, PRTi define as many memory zones QUEUEi, of variable length, which contains, in an orderly sequence or by indirect reference from a service to the other, all the programs/services intended for a processor.

It is in processor PRTi table and in QUEUi that the messages intended for the several processors are completely stored.

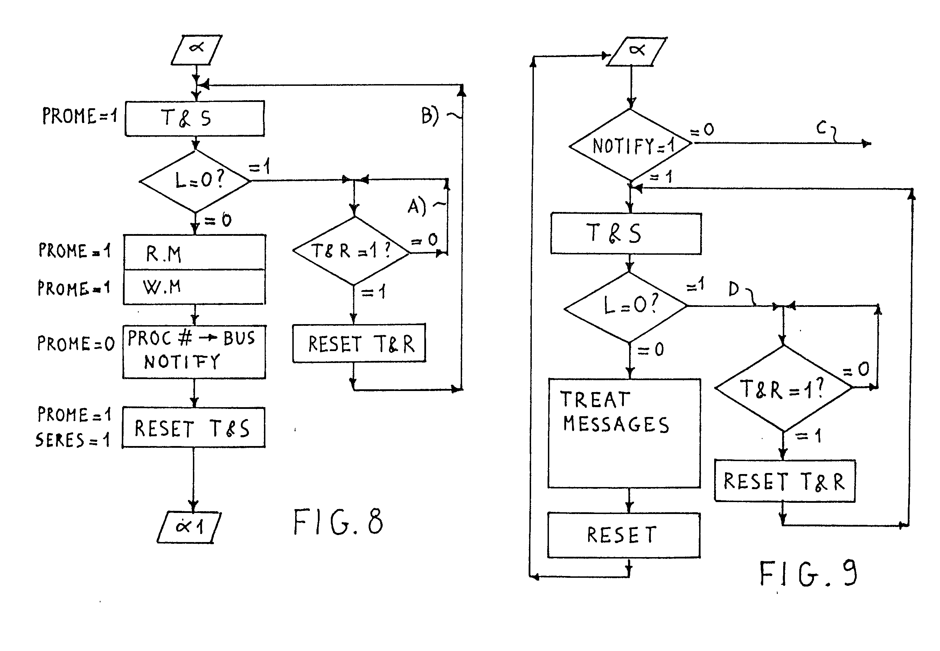

Fig. 8 shows in flow chart the operations that a processor i executes for storing into memory a message intended for a processor J and consisting for instance in the command to begin a program and to send a notifying signal to it.

Starting from an initial condition where a notify operation (indicated with $d$) is needed, processor i activates a microprogram which runs as follows.

First of all a TEST & SET (T&S) command is sent to the memory by an access memory operation which involves the already seen procedure.

PROME signal on the interface will be at logical level 1.

T&S command is accompained on the BUS by the address of first PRTj word (processor table the access to which is required) and it requests the combined operation of reading the first PRTj word and of rewritting the same word raising locking bit L to logical level 1 if it already was not.

Therefore at the beginning of the dialogue a bit L=1 is put as data to be written on DAC-BUS.

At the memory cycle end, at about the end of the dialogue, the memory put on DAC-BUS the information read out and previously contained into the first PRTj word.

Such information is examined by processor 1.

If bit L is at 0, that means that PRTj was not occuped and that processor i has taken access to it, it can therefore go on with its dialogue with the memory reading the second PRTj word.

The information therein included is examined by processor i and if necessary up dated with a new message.

If at least a program is present in QUEUEj, processor i reads the fourth PRTj word obtaining the address of QUEUEj end.

At this point it can, by means of subsequent write operations beginning from the received address, add to memory QUEUEj the program instruction for processor j.   The last address used, incresed by 1, is then writ ten on the fourth PRTj word.

Thus the queue end address is updated.

All these operations accur with a dialogue between processor and memory, PROME signal is therefore at logical level 1.

At this point a signal NOTIFY is sent to processor j putting on DACBUS the name of processor j, NOTIFY signal, at logical level 1 and PROME signal at logical level 0.

Flip-flop 68 in processor j is therefore set.

As microprogram ends, processor i sends a RESET T&S command to memory. Owing to such command first PRTj word is addressed and bit L is lowered to logical level 0, so leaving PRTj and QUEUEj resources free to be used by the other processors.

Such command is evidently accompained by PROME signal at logical level 1.   Such command is further accompained by a SERES signal at logical level 1.

This signal, besides the memory, is received by all the processors connected to the BUS and, during the dialogue on the BUS, with the fall of PROCOL to logical lovel 0, it sets the flip-flop corresponding to 88 of figure 1 in all the processors.

At the end of BUS occupation cycle, with ENCY raising again to logical level 1, in all the processors the flip-flop T&R corresponding to 69 of Figure 1 is therefore set.

This signals to all the processors that at least some resources previu sly occuped has been set free.

The importance of such artifice is clear.

In fact, if a processor i, which wants to access the resources dedica ted to processor j (PRTj) into memory, with a TEST & SET operation finds the resources occuped, it must generally try again to access such resources repeating the T&R command untill it finds that such re sources are free.

Each T&S operation involves a memory access and therefore a BUS occupation which is competitive and prejudicial to the BUS utilization by the other processors.

This is avoided by means of the described artifice.

Considering again the flow chart of figure 8, it can be seen that, after a first T&S operation, processor i examines the logical level of bit L.

If L=1 no further access attempts are made, but processor i examines the state of its T&R flip-flop.

Evidently such operation does not involve the BUS occupation but this one occurs inside the processor.

If T&R is reset (T&R = 0) the processor goes on cyclically testing the state (path A).

If T&R is set, which occurs when some common resources that is any of the processor table PRT is set free by any one of the processors, flip-flop T&R is set.

At this point processor i executes a T&S operation again (path B) resetting with microcommand MP its flip-flop T&R.

If the resources set free are the ones to which processor i wants to access, the notifying process can be concluded.

If the resources set free are not the one to which processor i wants to access (L = 1) processor i will start again examining the state of its flip-flop T&R untill this one is set again.

In this case the operation cycle goes on untill the requested resources are effectively available and involves a reduced number of memory occupation cycles.

Once described in the whole the notifying operation among processors and the apparatus which performs it, it is possible to complete such description showing how the notified processor answers to the notifying signal.

Figure 9 shows in flow chart the operations performed by the notified processor.

At the beginning of each microprogram to be executed, indicated with $\alpha$ , first of all each processor examines the state of flip-flop NOTI. If NOTI is reset (NOTIFY = 0) the microprogram must be normally executed (path C).

If NOTIFY = 1 the microprogram jumps to a routin of the notifying signal treatment.

Such routine involves:

1°- a T&S operation of the memory to the fixed beginning address of the PRT table dedicated to processor j.

2°- bit L examination.

If L = 0 processor j accesses to the PRTj resources and reads the types of messages addressed to it and defined by the second PRTj word, it decides, on appropriate criterium basis, which type of message have to consider firstly and, consequently, it completes the requested information finding entering a queue, for instance QUEUEj.

Then it begins the treatment of the received messages up dating or putting at zero the beginning/end queue pointers and the message type pointers of 2° PRTj word.

All these operations, which can change from processor to processor and from message to message, are schematized with the TREAT MESSAGES operating block.

Finally, if no messages to be trated are still in the dedicated resources, it resets its flip-flop NOTI by a microcommand MB and by a reset command set its dedicates resources free starting again the execution of the initial microprogram or starting the execution of the programs/ services it was required to begin.

3°- If instead L = 1 processor j begins to examine the state of its flip -flop T&R (path D) untill this one is set (T&R = 1).

At this point processor j tries again an access operation to the dedi
cated resources and so on untill the access is obtained.

0032182

- 39 -

Claims

1. In a multiprocessor system comprising a plurality of processors (1, 2, 3) and at least a memory unit (4) having common resources ac cessible by all the system processors, said processors and said memo ry unit being coupled by means of a common bus (6), apparatus for ac cessing said common resources by said processors characterized in that it comprises:

in the memory unit: at least a memory zone forming a common resource, whose status of available/busy resource is defined by an information stored in a predetermined memory position, said information being modified by the processor which access and subsequently releases said resource,

in each processor: means to forward to said memory unit a release com mand for releasing said common resource and bistable means, set in a first state by said release command, irrespective of the processor who forward release command, and reset in a second state by a command generated by the processor to which said bistable means pertains.

2. In a multiprocessor system having an apparatus for accessing common resources as claimed in claim 1, a process for accessing to a memory common resource by a system processor characterized in that it comprises the following phases:

− forwarding to the memory of a joint command for reading of said pre determined memory position in which said information of available/busy resource is stored, and for writing in said predetermined memory posi tion an information of busy resource, if said information of busy resource was not already stored,

− accessing said common resource if said common resource was available,

- cyclically testing the status of said internal bistable means, by said processor, if said common resource was busy, without accessing and using said common bus, till said bistable means is set in said first state,

- resetting in said second state said bistable means, by said processor,

- forwarding again to the memory said joint command for reading said memory position and for writing in said predetermined memory position an information of busy resource if said information of busy resource was not already stored.

FIG.1

FIG.2

FIG.3

FIG.4

FIG.5

0032182

$-\dfrac{3}{6}-$

FIG.6

0032182

- 5/6

FIG.7

FIG.8

FIG.9

0032182

**0032182**

European Patent
Office

**EUROPEAN SEARCH REPORT**

Application number

EP 80 10 7274

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | G 06 F 13/00 |
| X | US - A - 3 528 061 (ZURCHER)  * Column 9, lines 19-72 *  ---- | 1,2 | |

**TECHNICAL FIELDS SEARCHED (Int. Cl.³)**

G 06 F 13/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 18-03-1981 | WEBER |

EPO Form 1503.1 06.78